# EUROPÄISCHE PATENTSCHRIFT

(11) **EP 3 625 837 B1**
(45) Veröffentlichungstag und Bekanntmachung des Hinweises auf die Patenterteilung: **10.04.2024**
(21) Anmeldenummer: 18729873.2
(22) Anmeldetag: 11.05.2018
(51) Int. Cl.: H01M 50/503, H01M 50/516, H01M 50/574

(54) **VERFAHREN ZUM ANORDNEN EINES KONTAKTELEMENTS, KONTAKTELEMENT SOWIE BATTERIESTAPEL**
METHOD FOR ARRANGING A CONTACT ELEMENT, CONTACT ELEMENT AND BATTERY STACK
PROCÉDÉ DE MONTAGE D'UN ÉLÉMENT DE CONTACT, ÉLÉMENT DE CONTACT ET EMPILEMENT DE BATTERIES

(30) Priorität: 18.05.2017 DE 102017208395
(43) Veröffentlichungstag der Anmeldung: 25.03.2020
(73) Patentinhaber: Lion Smart GmbH, 85748 Garching (DE)
(72) Erfinder: MAYER, Tobias, 80805 München (DE)
(74) Vertreter: Bals & Vogel Patentanwälte PartGmbB
(86) Internationale Anmeldenummer: PCT/EP2018/062252
(87) Internationale Veröffentlichungsnummer: WO 2018/210699

(56) Entgegenhaltungen:
- EP-A1- 2 618 397
- EP-A1- 3 096 377
- DE-A1-102015 215 598

## Beschreibung

Die vorliegende Erfindung betrifft ein Verfahren zum Anordnen eines Kontaktelements an einer Batteriezelle einer Batterieebene eines Batteriestapels für eine Batterievorrichtung eines Fahrzeugs. Ferner betrifft die Erfindung ein Kontaktelement für eine Batteriezelle einer Batterieebene eines Batteriestapels für eine Batterievorrichtung eines Fahrzeugs, aufweisend einen Kontaktplattenabschnitt, einen Übergangsabschnitt und einen Pluspolabschnitt, wobei der Kontaktplattenabschnitt den Übergangsabschnitt umgibt und der Übergangsabschnitt den Pluspolabschnitt umgibt, und wobei ferner der Kontaktplattenabschnitt und der Pluspolabschnitt zueinander beabstandet und parallel oder zumindest im Wesentlichen parallel angeordnet sind. Außerdem betrifft die Erfindung einen Batteriestapel, aufweisend zumindest eine Batterieebene mit zumindest einer Batteriezelle, wobei an der Batteriezelle ein Kontaktelement angeordnet ist.

Elektrische Energiespeicher werden in der modernen Technik weitläufig eingesetzt, beispielsweise in Elektro- und/oder Hybridfahrzeugen. Mögliche Ausgestaltungsformen derartiger Energiespeicher sind beispielsweise Lithium-Ionen-Batterien. Um eine Leistungsfähigkeit derartiger Batterien zu steigern, ist es zum Beispiel bekannt, mehrere einzelne Batteriezellen in einer Batterieebene elektrisch parallel zu verschalten. Für diese elektrisch parallele Verschaltung werden zumeist Kontaktplatten eingesetzt, die aus einem elektrisch leitenden Material, beispielsweise Kupfer, bestehen. Um eine weitere Steigerung zu erzielen, können zwei oder mehrere dieser Batterieebenen zu einem Batteriestapel seriell verschaltet werden. Dazu können insbesondere die einzelnen Batterieebenen aufeinander angeordnet, insbesondere gestapelt, und elektrisch leitend verbunden werden. Auf diese Weise können insbesondere für Batterievorrichtungen von Fahrzeugen elektrische Energiespeicher mit einer hohen Leistungsdichte und gleichzeitig niedrigem Packmaß bereitgestellt werden.

Gemäß dem Stand der Technik ist es ferner bekannt, Kontaktelemente zum Herstellen eines elektrisch leitenden Kontakts zwischen Batteriezellen zweier Batterieebenen zu verwenden. Derartige Kontaktelemente sind ebenfalls zumindest abschnittsweise aus einem elektrisch leitenden Material gefertigt. Mit anderen Worten werden diese Kontaktelemente insbesondere zwischen zwei Batteriezellen aus zwei verschiedenen Batterieebenen angeordnet. Dabei ist es bekannt, die Kontaktplatte der Batterieebene mit Aufnahmeöffnungen für jeweils eine Batteriezelle auszugestalten, wobei das Kontaktelement zum einen mit der Kontaktplatte elektrisch leitend verbunden ist und zum anderen die Aufnahmeöffnung der Kontaktplatte durchgreift und dort einen Pol der Batteriezelle, bevorzugt einen Pluspol der Batteriezelle, elektrisch leitend kontaktiert. Die nächste Batteriezelle kann dann, bevorzugt mit deren Minuspol, an einer Seite des Kontaktelements angeordnet werden, die von der Kontaktplatte abgewandt ist. Auf diese Weise ergibt sich automatisch eine serielle Verschaltung der einzelnen Batterieebenen beziehungsweise der Batteriezellen der Batterieebenen.

Zur Erhöhung der Sicherheit eines Batteriestapels ist es ferner bekannt, in die Kontaktelemente Sicherungsabschnitte einzubringen, in denen ein Querschnitt, der für eine Stromleitung zwischen den Batteriezellen zur Verfügung steht, vermindert ist. Dies kann beispielsweise durch ein Einbringen von Sicherungsöffnungen in das Kontaktelement bereitgestellt werden. Bei einer zu hohen elektrischen Belastung, insbesondere bei zu hohen fließenden Strömen, wird das Kontaktelement an diesem verminderten Querschnitt aufgeschmolzen und die elektrisch leitende Verbindung dadurch unterbrochen. Eine Erhöhung der Sicherheit bei der Verwendung eines Batteriestapels mit derartigen Kontaktelementen kann dadurch erreicht werden.

Gemäß dem Stand der Technik ist es bekannt, die Kontaktelemente vollständig zu fertigen und anschließend in der Batterieebene, insbesondere an der Kontaktplatte der Batterieebene, anzuordnen. Ein derartiges Kontaktelement ist beispielsweise aus der DE 10 2015 005 529 A1 bekannt. Um die mechanische Stabilität des Kontaktelements zu gewährleisten, ist oftmals vorgesehen, die Sicherungsöffnungen zur Schaffung der Sicherungsabschnitte mit dem verminderten Querschnitt in einem Bereich des Kontaktelements anzuordnen, der zur Verbindung des Kontaktelements mit der Kontaktplatte vorgesehen ist. Ferner muss beim Einbringen der Sicherungsöffnungen auch berücksichtigt werden, dass durch das Entfernen von Material des Kontaktelements an dieser Stelle eine mechanische Stabilität des gesamten Kontaktelements nicht zu sehr beeinträchtigt wird. Dies stellt eine Begrenzung der möglichen Größen der einbringbaren Sicherungsabschnitte und damit der bereitstellbaren Sicherheit vor beispielsweise einer Überlastung bei zu hohen Strömen dar.

Die Druckschriften DE 10 2015 215 598 A1, EP 2 618 397 A1 und EP 3 096 377 A1 zeigen gattungsgemäße Verfahren und Vorrichtungen.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise ein Verfahren zum Anordnen eines Kontaktelements, ein Kontaktelement sowie einen Batteriestapel bereitzustellen, durch die sowohl eine Anordnung des Kontaktelements an einer Batteriezelle einer Batterieebene vereinfacht werden kann, wobei insbesondere gleichzeitig Einschränkungen und Randbedingungen beim Einbringen bzw. Vorsehen eines Sicherungsabschnitts mit vermindertem Querschnitt im Kontaktelement vermindert werden können.

Voranstehende Aufgabe wird gelöst durch ein Verfahren zum Anordnen eines Kontaktelements mit den Merkmalen des unabhängigen Anspruchs 1, durch ein Kontaktelement mit den Merkmalen des unabhängigen Anspruchs 11 sowie durch einen Batteriestapel mit den Merkmalen des nebengeordneten Anspruchs 16. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Kontaktelement sowie dem erfindungsgemäßen Batteriestapel und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch ein Verfahren zum Anordnen eines Kontaktelements an einer Batteriezelle einer Batterieebene eines
Batteriestapels für eine Batterievorrichtung eines Fahrzeugs. Ein erfindungsgemäßes Verfahren ist durch folgende Schritte gekennzeichnet:
a) Bereitstellen eines Kontaktelements mit zumindest einem Kontaktplattenabschnitt, einem Übergangsabschnitt und einem Pluspolabschnitt, wobei der Kontaktplattenabschnitt den Übergangsabschnitt umgibt und der Übergangsabschnitt den Pluspolabschnitt umgibt, und wobei ferner der Kontaktplattenabschnitt und der Pluspolabschnitt zueinander beabstandet und parallel oder zumindest im Wesentlichen parallel angeordnet sind,
b) Anordnen des in Schritt a) bereitgestellten Kontaktelements an der Batteriezelle der Batterieebene, wobei beim Anordnen des Kontaktelements der Kontaktplattenabschnitt an einer Kontaktplatte der Batterieebene und der Pluspolabschnitt an einem Pluspol der Batteriezelle der Batterieebene angeordnet wird, und
c) Einbringen zumindest einer Sicherungsöffnung in einen Perforationsbereich des Übergangsabschnitts zur Schaffung zumindest eines Sicherungsabschnitts im Übergangsabschnitt.

Kontaktelemente werden in Batteriestapeln verwendet, um insbesondere Batteriezellen verschiedener Batterieebenen elektrisch leitend miteinander zu verbinden. Bevorzugt werden jeweils ein Plus- und ein Minuspol der einzelnen Batteriezellen der verschiedenen Batterieebenen miteinander verbunden. Begrifflichkeiten bezüglich eines Plus- und eines Minuspols einer Batteriezelle sind in der gesamten Anmeldung vertauschbar, so dass auch Batteriezellen mit umgekehrter Polung durch ein Verfahren zum Anordnen eines Kontaktelements gemäß der Erfindung verbunden werden können. Durch ein erfindungsgemäßes Verfahren kann ein derartiges Kontaktelement an einer Batteriezelle einer Batterieebene angeordnet werden, wobei die Batterieebene ein Teil eines Batteriestapels für eine Batterievorrichtung eines Fahrzeugs ist. Derartige Batteriestapel können eine Vielzahl von Batterieebenen und diese Batterieebenen wiederum eine Vielzahl von Batteriezellen aufweisen, so dass zur Herstellung bzw. Montage eines Batteriestapels eine große Anzahl derartiger Kontaktelemente angeordnet werden muss.

In einem ersten Schritt a) eines erfindungsgemäßen Verfahrens wird das Kontaktelement, das angeordnet werden soll, bereitgestellt. Dieses Kontaktelement weist zumindest einen Kontaktplattenabschnitt, einen Übergangsabschnitt und einen Pluspolabschnitt auf. Der Kontaktplattenabschnitt ist dafür vorgesehen und entsprechend ausgebildet, eine Kontaktplatte der Batterieebene zu kontaktieren, insbesondere elektrisch leitend zu kontaktieren. Durch eine derartige Kontaktplatte können die Batteriezellen einer Batterieebene elektrisch leitend verbunden und dadurch parallel geschaltet werden. Der Pluspolabschnitt ist derjenige Teil des Kontaktelements, der zum insbesondere elektrisch leitenden Kontaktieren eines Pluspols einer Batteriezelle vorgesehen und entsprechend ausgebildet ist. Zwischen dem Kontaktplattenabschnitt und dem Pluspolabschnitt ist bei einem Kontaktelement, das durch ein erfindungsgemäßes Verfahren angeordnet werden kann, einen Übergangsabschnitt vorgesehen. Dabei sind der Kontaktplattenabschnitt, der Übergangsabschnitt und der Pluspolabschnitt derart relativ zueinander angeordnet, dass der Kontaktplattenabschnitt den Übergangsabschnitt umgibt und der Übergangsabschnitt dem Pluspolabschnitt umgibt. Das jeweilige Umgeben der einzelnen Abschnitte ist bevorzugt vollständig, kann jedoch auch nur als ein teilweises Umgeben ausgebildet sein. Mit anderen Worten weist das Kontaktelement eine Struktur auf, die außen den Kontaktplattenabschnitt aufweist, innen den Pluspolabschnitt aufweist und dazwischen den Übergangsabschnitt aufweist. Ferner sind der Kontaktplattenabschnitt und der Pluspolabschnitt derart relativ zueinander angeordnet, dass sie zum einen zueinander beabstandet und zum anderen parallel oder zumindest im Wesentlichen parallel zueinander angeordnet sind. Mit anderen Worten sind der Kontaktplattenabschnitt und der Pluspolabschnitt entlang einer Tiefenrichtung versetzt zueinander angeordnet. Die Tiefenrichtung entspricht insbesondere bevorzugt der Längserstreckung der einzelnen Batteriezellen. Durch die Anordnung des Übergangsabschnitts zwischen dem Kontaktplattenabschnitt und dem Pluspolabschnitt, ergibt sich automatisch, dass der Übergangsabschnitt eine Flächenorientierung aufweist, die nicht parallel oder zumindest im Wesentlichen nicht parallel zu dem Kontaktplattenabschnitt und dem Pluspolabschnitt ausgebildet ist. So kann beispielsweise bei einem im Wesentlichen rotationssymmetrischen Kontaktelement der Übergangsabschnitt konisch ausgebildet sein. Nach Abschluss des ersten Schritts a) eines erfindungsgemäßen Verfahrens ist eben ein derartiges Kontaktelement bereitgestellt und steht für weitere Verfahrensschritte zur Verfügung.

Im nächsten Schritt b) eines erfindungsgemäßen Verfahrens wird das in Schritt a) bereitgestellte Kontaktelement an der Batteriezelle der Batterieebene angeordnet. Dieses Anordnen wird insbesondere derart vorgenommen, dass der Kontaktplattenabschnitt des Kontaktelements an der Kontaktplatte der Batterieebene angeordnet wird. Wie oben beschrieben, ist der Kontaktplattenabschnitt insbesondere auch für diese Verwendung vorgesehen und entsprechend ausgebildet. Gleichzeitig wird der Pluspolabschnitt des Kontaktelements im Schritt b) an einem Pluspol der Batteriezelle der Batterieebene angeordnet. Auch hier ist, wie oben bereits beschrieben, der Pluspolabschnitt für diese Verwendung entsprechend vorgesehen und ausgebildet. Insbesondere ist durch den Übergangsabschnitt ermöglicht und bereitgestellt, dass der Kontaktplattenabschnitt und der Pluspolabschnitt eines erfindungsgemäßen Kontaktelements zueinander beabstandet angeordnet sind. Auf diese Weise kann eine Aufnahmeöffnung in der Kontaktplatte, in der die Batteriezelle, insbesondere der Pluspol der Batteriezelle, angeordnet wird, durch den Pluspolabschnitt des Kontaktelements durchgriffen werden. Dabei wird der Kontaktplattenabschnitt des Kontaktelements auf einer der Batteriezelle abgewandten Seite der Kontaktplatte angeordnet, der Pluspolabschnitt durchgreift die Öffnung und kann so den Pluspol der Batteriezelle kontaktieren. Insbesondere kann nach einem Abschluss des Anordnens des Kontaktelements eine elektrisch leitende Verbindung zwischen dem Pluspol über das Kontaktelement zur Kontaktplatte der Batterieebene hergestellt werden.

Im nächsten Schritt c) eines erfindungsgemäßen Verfahrens wird nun zumindest eine Sicherungsöffnung in einen Perforationsbereich des Übergangsabschnitts eingebracht. Der Perforationsbereich kann den gesamten Übergangsabschnitt oder aber nur Teile des Übergangsabschnitts ausfüllen. Durch das Einbringen der Sicherungsöffnung wird im Übergangsabschnitt gleichzeitig ein Sicherungsabschnitt geschaffen. Die Sicherungsöffnung stellt mit anderen Worten ein Loch im Kontaktelement da, das dadurch insbesondere für eine Leitung von Strom zwischen der Batteriezelle und der Kontaktplatte nicht mehr zur Verfügung steht. Die gesamte elektrische Leitung des Kontaktelements wird somit im Bereich des Übergangsabschnitts nur durch den zumindest einen Sicherungsabschnitt bereitgestellt. Der zumindest eine Sicherungsabschnitt stellt somit beispielsweise insbesondere den Bereich des Kontaktelements dar, der bei einer Überlast besonders beansprucht wird und dadurch bei einer zu hohen Belastung aufschmelzen kann. Eine Absicherung der Batteriezelle und dadurch des gesamten Batteriestapels gegenüber einer Beschädigung bei einer auftretenden Überlast kann dadurch bereitgestellt werden.

Insgesamt bringt ein erfindungsgemäßes Verfahren mehrere Vorteile mit sich. Erfindungswesentlich bei einem erfindungsgemäßen Verfahren ist, dass die Sicherungsöffnung erst zu einem Zeitpunkt in das Kontaktelement eingebracht wird, nachdem das Kontaktelement an der Batteriezelle der Batterieebene angeordnet ist. Eine Beeinträchtigung der mechanischen Stabilität des Kontaktelements durch bereits bei der Herstellung des Kontaktelements eingebrachte Sicherungsöffnungen kann dadurch vermieden werden. Das verwendete Kontaktelement kann somit insgesamt leichter bzw. dünner ausgebildet sein, da die Schwächung der mechanischen Stabilität durch die eingebrachte Sicherungsöffnung nicht durch das restliche Material des Kontaktelements ausgeglichen werden muss. Des Weiteren ergibt sich bei einem erfindungsgemäßen Verfahren der Vorteil, dass der Sicherungsabschnitt in einen Perforationsbereich des Übergangsabschnitts zwischen dem Kontaktplattenabschnitt und dem Pluspolabschnitt eingebracht wird. Dieser Übergangsabschnitt stellt einen mechanisch nicht oder zumindest nur wenig beanspruchten Teil des Kontaktelements dar. Durch das bereits erfolgte Anordnen des Kontaktelements kann in Schritt c) die Sicherungsöffnung auch ohne Einschränkung der Größe in dem Perforationsbereich des Übergangsabschnitts eingebracht werden. Auf diese Weise ist es möglich, besonders kleine Sicherungsabschnitte im Kontaktelement bereitzustellen. Ein derartiger kleiner Sicherungsabschnitt wird jedoch schon bei einer Überlast durchschmelzen, die kleiner ist als bei den Sicherungsabschnitten der bekannten Kontaktelemente des Standes der Technik. Auf diese Weise kann insbesondere bereitgestellt werden, dass bei einem internen fehlerhaften Verhalten einer der Batteriezellen, zum Beispiel bei einem Kurzschluss in dieser Batteriezelle, eine Passivierung dieser einen speziellen Batteriezelle besonders einfach und sicher und insbesondere automatisch vorgenommen werden kann. Ferner kann auch eine Steigerung der Sicherheit gegenüber einer Beschädigung durch Überlast für den gesamten Batteriestapel auf diese Weise bereitgestellt werden. Zusammenfassend kann somit durch ein erfindungsgemäßes Verfahren das Anordnen eines Kontaktelements vereinfacht werden, da die Kontaktelemente beim Anordnen eine größere mechanische Stabilität aufweisen. Die Montage des Kontaktelements kann dadurch schneller erfolgen. Zusätzlich kann durch die Möglichkeit von besonders kleinen Sicherungsabschnitten die Sicherheit beim Betreiben eines Batteriestapels gegen eine Beschädigung bei Überlast erhöht werden.

Bevorzugt kann ein erfindungsgemäßes Verfahren dahingehend weiterentwickelt sein, dass in Schritt c) eine einzige Sicherungsöffnung eingebracht und dadurch ein einziger Sicherungsabschnitt geschaffen wird. Auf diese Weise kann ein freier Querschnitt des Sicherungsabschnitts, der für die Stromleitung zur Verfügung steht, besonders einfach und mit hoher Präzision eingestellt werden. Darüber hinaus stellt das Einbringen einer einzigen Sicherungsöffnung nur einen einzigen Arbeitsschritt dar, so dass das gesamte Einbringen der Sicherungsöffnung insgesamt vereinfacht werden kann. Durch diese Weiterentwicklung eines erfindungsgemäßen Verfahrens kann somit das Anordnen des Kontaktelements weiter beschleunigt werden, wodurch sich eine Reduktion der Herstellungskosten des Batteriestapels ergibt.

Darüber hinaus kann ein erfindungsgemäßes Verfahren bevorzugt dahingehend weiterentwickelt sein, dass die Sicherungsöffnung abschnittsweise ringförmig ausgebildet ist, wobei eine Erstreckung der Sicherungsöffnung über 75 %, bevorzugt über 85 %, besonders bevorzugt über 95 %, der Erstreckung eines Vollrings entspricht. Eine derartige abschnittsweise ringförmig ausgebildete Sicherungsöffnung stellt eine besonders bevorzugte Ausgestaltungsform dar. Insbesondere bei einem Kontaktelement, dessen Übergangsabschnitt konisch ausgebildet ist, stellt eine zumindest abschnittsweise ringförmige Sicherungsöffnung eine günstige Ausgestaltungsform dar. Mit anderen Worten ist die Sicherungsöffnung in diesem Fall als eine Ringnut ausgebildet. Dabei kann sich die Sicherungsöffnung über einen Großteil der Erstreckung eines Vollrings erstrecken, bevorzugt deutlich über 75 %, insbesondere besonders bevorzugt sogar über 95 % der Erstreckung eines Vollrings. Freie Querschnitte des Sicherungsabschnitts für den Stromfluss zwischen dem Pluspol der Batterie und der Kontaktplatte von unter 0,1 mm² können dadurch erreicht werden. Eine Sicherheit gegen eine auftretende Überlast bei einem Betrieb des Batteriestapels kann dadurch weiter gesteigert werden.

Ferner kann bei einem erfindungsgemäßen Verfahren vorgesehen sein, dass das Einbringen der zumindest einen Sicherungsöffnung in Schritt c) durch eine Laserperforation durchgeführt wird. Bei Laserperforationen werden Laserstrahlen eingesetzt, um das Material des Kontaktelements, insbesondere des Perforationsbereichs, aufzuschmelzen oder sogar zu verdampfen. Durch den Einsatz von Laserstrahlen kann insbesondere die örtliche Genauigkeit des Einbringens der Sicherungsöffnung gesteigert werden. Ein besonders genaues Einbringen der Sicherungsöffnung beziehungsweise des Sicherungsabschnitts, insbesondere auch von filigranen Strukturen der Sicherungsöffnung beziehungsweise des Sicherungsabschnitts, in den Perforationsbereich des Übergangsabschnitts kann somit durch die Verwendung von Laserperforation bereitgestellt werden.

Darüber hinaus kann ein erfindungsgemäßes Verfahren dahingehend weiterentwickelt sein, dass durch die Laserperforation Material des Perforationsbereichs verdampft wird, wobei bevorzugt das verdampfte Material abgesaugt wird. Durch das Verdampfen des Materials des Perforationsbereichs kann insbesondere vermieden werden, dass aufgeschmolzenes Material des Perforationsbereichs insbesondere unkontrolliert am Kontaktelement verbleibt. Ungewollte Kontaktbrücken über die Sicherungsöffnung hinweg, die durch das aufgeschmolzene Material gebildet werden, können dadurch vermieden werden. Durch das bevorzugte Absaugen des verdampften Materials kann darüber hinaus sichergestellt werden, dass sich das verdampfte Material nicht unkontrolliert im Bereich des Kontaktelements ablagert. Eine besonders saubere und sichere Methode des Einbringens der zumindest einen Sicherungsöffnung kann auf diese Weise bereitgestellt werden.

Ferner kann ein erfindungsgemäßes Verfahren dahingehend ausgebildet sein, dass beim Anordnen in Schritt b) der Kontaktplattenabschnitt des Kontaktelements an der Kontaktplatte und der Pluspolabschnitt des Kontaktelements am Pluspol der Batteriezelle befestigt werden. Das Befestigen des Kontaktplattenabschnitts an der Kontaktplatte und des Pluspolabschnitts am Pluspol stellt ein mechanisches Befestigen der jeweiligen Elemente aneinander dar. Auf diese Weise kann eine relative Positionierung der einzelnen Bauteile, insbesondere des Kontaktelements, der Kontaktplatte und der Batteriezelle, zueinander sichergestellt werden. Durch die Sicherstellung der mechanischen Befestigung kann gleichzeitig und zusätzlich auch sichergestellt werden, dass zwischen den Bauteilen eine elektrisch leitende Verbindung hergestellt wird. Auf diese Weise kann ein Fließen von elektrischer Ladung zwischen der Kontaktplatte und dem Pluspol der Batteriezelle über das Kontaktelement sichergestellt werden.

Darüber hinaus kann ein erfindungsgemäßes Verfahren dahingehend weiterentwickelt sein, dass der Kontaktplattenabschnitt des Kontaktelements an der Kontaktplatte und der Pluspolabschnitt am Pluspol der Batteriezelle durch eine Befestigungsvorrichtung stoffschlüssig befestigt werden, insbesondere, dass der Kontaktplattenabschnitt des Kontaktelements an der Kontaktplatte und der Pluspolabschnitt am Pluspol der Batteriezelle durch eine Laservorrichtung stoffschlüssig laserverschweißt werden. Durch die bevorzugte stoffschlüssige Befestigung der einzelnen Elemente aneinander durch eine Befestigungsvorrichtung kann insbesondere vermieden werden, dass weitere Befestigungselemente, wie beispielsweise Schrauben, Klammern oder Ähnliches nötig sind, um das Kontaktelement an der Kontaktplatte bzw. am Pluspolabschnitt zu befestigen. Eine mechanische Komplexität sowohl des Befestigungsvorgangs als auch des gesamten Batteriestapels kann dadurch gesenkt werden. Besonders bevorzugt kann für dieses stoffschlüssige Befestigen eine Laservorrichtung eingesetzt werden, durch die der Kontaktplattenabschnitt mit der Kontaktplatte und der Pluspolabschnitt mit dem Pluspol laserverschweißt werden. Durch dieses Laserverschweißen werden die Materialien der beteiligten Bauelemente, also des Kontaktplattenabschnitts und der Kontaktplatte bzw. des Pluspolabschnitts und des Pluspols, lokal aufgeschmolzen und dadurch stoffschlüssig miteinander verbunden. Dies stellt eine besonders einfache und daher bevorzugte stoffschlüssige Befestigung des Kontaktelements an der Kontaktplatte und am Pluspol der Batteriezelle dar.

Besonders bevorzugt kann ein erfindungsgemäßes Verfahren dadurch weiterentwickelt sein, dass zum Einbringen der zumindest einen Sicherungsöffnung in Schritt c) die in Schritt b) verwendete Befestigungsvorrichtung, insbesondere die Laservorrichtung, verwendet wird. Auf diese Weise kann beispielsweise ermöglicht werden, dass das Befestigen des Kontaktelements an der Kontaktplatte und am Pluspol und das Einbringen der Sicherungsöffnung ohne einen dazwischen nötigen Wechsel der eingesetzten Gerätschaften durchgeführt werden kann. Das Anordnen eines Kontaktelements kann auf diese Weise insgesamt beschleunigt werden. Insgesamt können durch diese Zeitersparnis bei der Herstellung und Montage eines Batteriestapels dadurch auch Kosten eingespart werden. Durch den Einsatz einer Laservorrichtung können zusätzlich die oben bereits beschriebenen Vorteile eines Einbringens der Sicherungsöffnung durch eine Laserperforation bereitgestellt werden.

Darüber hinaus kann beim erfindungsgemäßen Verfahren vorgesehen sein, dass ein Isolationsvolumen der Batterieebene, das wenigstens auf einer Seite zumindest abschnittsweise durch den Übergangsabschnitt begrenzt wird, zumindest teilweise mit einem Isolationsmaterial verfüllt wird. Ein derartiges Isolationsvolumen stellt insbesondere einen Hohlraum dar, der zumindest abschnittsweise durch den Übergangsabschnitt des Kontaktelements begrenzt wird. Weitere Begrenzungen des Isolationsvolumens können beispielsweise die Kontaktplatte und die Batteriezelle oder aber auch zum Beispiel eine Isolationsplatte der Batterieebene sein. Durch das zumindest teilweise Verfüllen mit einem Isolationsmaterial kann vermieden werden, dass ungefüllte Volumina in der Batterieebene des Batteriestapels verbleiben. Durch die Verwendung eines Isolationsmaterials kann gleichzeitig eine bessere elektrische Isolierung bereitgestellt werden, wobei insbesondere eine ungewollte Leitung von Strom durch dieses Isolationsvolumen verhindert werden kann. Durch das Verfüllen des Isolationsvolumens kann ferner auch eine mechanische Stabilität des gesamten Batteriestapels erhöht werden.

Gemäß einer bevorzugten Weiterentwicklung eines erfindungsgemäßen Verfahrens kann ferner vorgesehen sein, dass das Isolationsmaterial zumindest eine der folgenden Eigenschaften aufweist:
- fließfähig
- rieselfähig
- aushärtend
- formstabil

Dabei ist diese Liste nicht abgeschlossen, so dass das Isolationsmaterial auch weitere Eigenschaften aufweisen kann, soweit technisch sinnvoll und möglich. Die einzelnen Eigenschaften können durch das Isolationsmaterial einzeln oder aber auch gleichzeitig ausgewiesen werden. Auch ein Aufweisen von mehreren der Eigenschaften zeitlich nacheinander durch das Isolationsmaterial ist denkbar. So kann beispielsweise ein fließfähiges bzw. rieselfähiges Isolationsmaterial insbesondere durch die Sicherungsöffnung in das Isolationsvolumen eingefüllt werden, wobei es anschließend aushärtet und schließlich eine formstabile Gestalt annimmt. Eine vielfältige Ausfüllung des Isolationsvolumens durch das Isolationsmaterial kann auf diese Weise bereitgestellt werden.

Gemäß einem zweiten Aspekt der Erfindung wird die Aufgabe gelöst durch ein Kontaktelement für eine Batteriezelle einer Batterieebene eines Batteriestapels für eine Batterievorrichtung eines Fahrzeugs, aufweisend einen Kontaktplattenabschnitt, einen Übergangsabschnitt und einen Pluspolabschnitt, wobei der Kontaktplattenabschnitt den Übergangsabschnitt umgibt und der Übergangsabschnitt den Pluspolabschnitt umgibt, und wobei ferner der Kontaktplattenabschnitt und der Pluspolabschnitt zueinander beabstandet und parallel oder zumindest im Wesentlichen parallel angeordnet sind. Ein erfindungsgemäßes Kontaktelement ist dadurch gekennzeichnet, dass der Übergangsabschnitt einen Perforationsbereich zum Einbringen zumindest einer Sicherungsöffnung zur Schaffung zumindest eines Sicherungsabschnitts aufweist.

Ein erfindungsgemäßes Kontaktelement ist für eine Bereitstellung einer elektrisch leitenden Verbindung zwischen einer Kontaktplatte einer Batterieebene und einem Pluspol einer Batteriezelle vorgesehen. Dafür weist das Kontaktelement einen Kontaktplattenabschnitt auf, der für eine Anordnung an einer Kontaktplatte einer Batterieebene vorgesehen und ausgebildet ist. Gleichzeitig weist das Kontaktelement einen Pluspolabschnitt auf, der entsprechend für ein Anordnen an einem Pluspol einer Batteriezelle vorgesehen und ausgebildet ist. Der Kontaktplattenabschnitt umgibt den Pluspolabschnitt, wobei zwischen dem Kontaktplattenabschnitt und dem Pluspolabschnitt ein Übergangsabschnitt angeordnet ist. Somit ist, beispielsweise bei einer zumindest im Wesentlichen rotationssymmetrischen Ausgestaltung eines Kontaktelements, der Kontaktplattenabschnitt außen und der Pluspolabschnitt innen angeordnet, wobei sich der Übergangsabschnitt zwischen dem Kontaktplattenabschnitt und dem Pluspolabschnitt befindet. Der Kontaktplattenabschnitt umgibt den Übergangsabschnitt bevorzugt vollständig, kann diesen jedoch auch nur teilweise umgeben. Dasselbe gilt für den Übergangsabschnitt und den Pluspolabschnitt, so dass der Übergangsabschnitt den Pluspolabschnitt bevorzugt vollständig umgibt, ihn jedoch auch nur teilweise umgeben kann. Darüber hinaus sind der Kontaktplattenabschnitt und der Pluspolabschnitt derart am Kontaktelement vorgesehen, dass sie zueinander beabstandet angeordnet sind und parallel oder zumindest im Wesentlichen parallel zueinander angeordnet sind. Mit anderen Worten sind der Kontaktplattenabschnitt und der Pluspolabschnitt zueinander in einer Tiefenrichtung beabstandet angeordnet, wobei die Tiefenrichtung bevorzugt zumindest im Wesentlichen der Längserstreckung der Batteriezelle entspricht. Dies bedeutet insbesondere, dass der Übergangsabschnitt, der sich zwischen dem Kontaktplattenabschnitt und dem Pluspolabschnitt erstreckt, eine Flächenorientierung aufweist, die eben nicht parallel oder zumindest im Wesentlichen nicht parallel zum Kontaktplattenabschnitt und zum Pluspolabschnitt ist. Bei einer zumindest im Wesentlichen rotationssymmetrischen Ausgestaltung eines Kontaktelements kann beispielsweise der Übergangsabschnitt bevorzugt konisch ausgebildet sein. Auf diese Weise kann bereitgestellt werden, dass der Kontaktplattenabschnitt die Kontaktplatte der Batterieebene auf einer Seite kontaktiert und der Pluspolabschnitt in eine Anordnungsöffnung der Kontaktplatte eingreift, in der die Batteriezelle angeordnet ist.

Erfindungswesentlich ist bei einem erfindungsgemäßen Kontaktelement vorgesehen, dass der Übergangsabschnitt einen Perforationsbereich zum Einbringen zumindest einer Sicherungsöffnung zur Schaffung zumindest eines Sicherungsabschnitts aufweist. Es ist erfindungsgemäß vorgesehen, dass dieses Einbringen der zumindest einen Sicherungsöffnung erst dann erfolgt, wenn das Kontaktelement bereits an der Kontaktplatte und der Batteriezelle angeordnet, bevorzugt befestigt ist. Auf diese Weise kann das Kontaktelement als stabiles Bauteil, insbesondere ohne Sicherungsöffnungen, an der Batteriezelle und an der Kontaktplatte angeordnet werden. Die Sicherungsöffnung wird erst nach Abschluss dieser Anordnung im Perforationsbereich des Übergangsabschnitts erzeugt. Der Übergangsabschnitt stellt insbesondere bevorzugt einen mechanisch wenig beanspruchten Bereich des Kontaktelements dar, da bevorzugt die Befestigung des Kontaktelements an der Kontaktplatte im Kontaktplattenabschnitt erfolgt und die Befestigung des Pluspolabschnitts am Pluspol erfolgt. Auf diese Weise kann das Kontaktelement insgesamt mechanisch einfacher und beispielsweise auch leichter ausgebildet werden. Ferner ergeben sich keine Einschränkungen an die Sicherungsöffnung und den zumindest einen Sicherungsabschnitt durch Vorgaben, die durch das Anordnen bzw. die Montage des Kontaktelements an der Batterieebene vorgegeben werden. Eine bessere Anpassung der zumindest einen Sicherungsöffnung und des zumindest einen Sicherungsabschnitts an die Anforderungen der abzusichernden elektrischen Leistung kann dadurch ermöglicht werden. Insgesamt kann somit Montage eines erfindungsgemäßen Kontaktelements an einer Batteriezelle vereinfacht und gleichzeitig eine Sicherheit beim Betreiben eines Batteriestapels mit derartigen Kontaktelementen erhöht werden.

Es ist beim erfindungsgemäßen Kontaktelement vorgesehen, dass das Kontaktelement unter Verwendung eines Verfahrens gemäß dem ersten Aspekt der Erfindung angeordnet ist. Auf diese Weise ergeben sich sämtliche Vorteile, die bereits ausführlich in Bezug auf ein Verfahren gemäß dem ersten Aspekt der Erfindung beschrieben worden sind, selbstverständlich auch für ein Kontaktelement, das unter Verwendung eines derartigen Verfahrens gemäß dem ersten Aspekt der Erfindung angeordnet worden ist.

Darüber hinaus kann bei einem erfindungsgemäßen Kontaktelement vorgesehen sein, dass der Perforationsbereich zumindest abschnittsweise aus einem verdampfbaren Material besteht. Auf diese Weise kann ermöglicht werden, dass das Einbringen der Sicherungsöffnung durch ein Verdampfen dieses verdampfbaren Materials durchgeführt wird. Insbesondere fällt, beispielsweise im Gegensatz zum einfachen Aufschmelzen, kein Abfallmaterial an, das schlimmstenfalls eine ungewollte leitende Verbindung zwischen beispielsweise der Kontaktplatte und dem Pluspol herstellt. Besonders bevorzugt kann vorgesehen sein, dass das verdampfbare Material nur an denjenigen Stellen des Perforationsbereichs vorhanden ist, an denen die Sicherungsöffnung eingebracht werden soll. So kann beispielsweise der Übergangsabschnitt im Bereich des Perforationsbereichs besonders dünn ausgebildet werden, um dort verdampfbares Material zu schaffen. Ein besonders einfaches Einbringen der Sicherungsöffnung in den Übergangsabschnitt kann dadurch bereitgestellt werden.

Auch kann ein erfindungsgemäßes Kontaktelement dahingehend ausgebildet sein, dass in einer an der Batteriezelle der Batterieebene angeordneten Position des Kontaktelements der Übergangsabschnitt wenigstens auf einer Seite zumindest abschnittsweise eine Seite eines Isolationsvolumens der Batterieebene begrenzt. Ein derartiges Isolationsvolumen kann insbesondere bevorzugt mit einem Isolationsmaterial verfüllt werden. Andere Seiten des Isolationsvolumens können beispielsweise durch die Kontaktplatte, die Batteriezelle und/oder einer Isolationsplatte der Batterieebene begrenzt werden. Durch ein derartiges Isolationsvolumen, insbesondere durch ein mit einem Isolationsmaterial verfülltes Isolationsvolumen, kann eine noch bessere Isolierung zwischen der Kontaktplatte und beispielsweise der Batteriezelle bereitgestellt werden. Insbesondere kann dadurch vermieden werden, dass in der Batterieebene ungefüllte Volumina vorhanden sind. Durch das Verfüllen des Isolationsvolumens kann insbesondere auch eine mechanische Stabilität des gesamten Batteriestapels erhöht werden.

Ferner kann beim erfindungsgemäßen Kontaktelement vorgesehen sein, dass das Kontaktelement Befestigungsmittel, insbesondere Befestigungsklammern, zum Befestigen eines Minuspols einer Batteriezelle einer weiteren Batterieebene des Batteriestapels aufweist, wobei die Befestigungsmittel bevorzugt am Kontaktplattenabschnitt angeordnet sind. Auf diese Weise kann insbesondere besonders einfach eine Stapelbarkeit der einzelnen Batterieebenen des Batteriestapels bereitgestellt werden. Durch das Vorsehen von Befestigungsmitteln am Kontaktelement kann insbesondere eine Integration der Befestigung der Batteriezellen der nächsten Batterieebene bereits durch das Kontaktelement bereitgestellt werden. Eine Steigerung der Kompaktheit eines Batteriestapels kann dadurch ermöglicht werden.

Gemäß einem dritten Aspekt der Erfindung wird die Aufgabe gelöst durch einen Batteriestapel, aufweisend zumindest eine Batterieebene mit zumindest einer Batteriezelle, wobei an der Batteriezelle ein Kontaktelement angeordnet ist. Ein erfindungsgemäßer Batteriestapel ist dadurch gekennzeichnet, dass das Kontaktelement gemäß einem der Ansprüche gemäß dem zweiten Aspekt der Erfindung ausgebildet ist und gemäß einem Verfahren gemäß dem ersten Aspekt der Erfindung an der Batteriezelle angeordnet ist. Auf diese Weise können durch einen erfindungsgemäßen Batteriestapel dieselben Vorteile bereitgestellt werden, die bereits ausführlich in Bezug auf ein Kontaktelement gemäß dem zweiten Aspekt der Erfindung und/oder in Bezug auf ein Verfahren gemäß dem ersten Aspekt der Erfindung beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Die Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen. Elemente mit gleicher Funktion und Wirkungsweise sind in den Figuren mit denselben Bezugszeichen versehen. Es zeigen schematisch:
- Fig. 1: ein erfindungsgemäßes Verfahren zum Anordnen eines erfindungsgemäßen Kontaktelements,
- Fig. 2: einen erfindungsgemäßen Batteriestapel, und
- Fig. 3: eine weitere Ausgestaltungsform eines erfindungsgemäßen Kontaktelements.

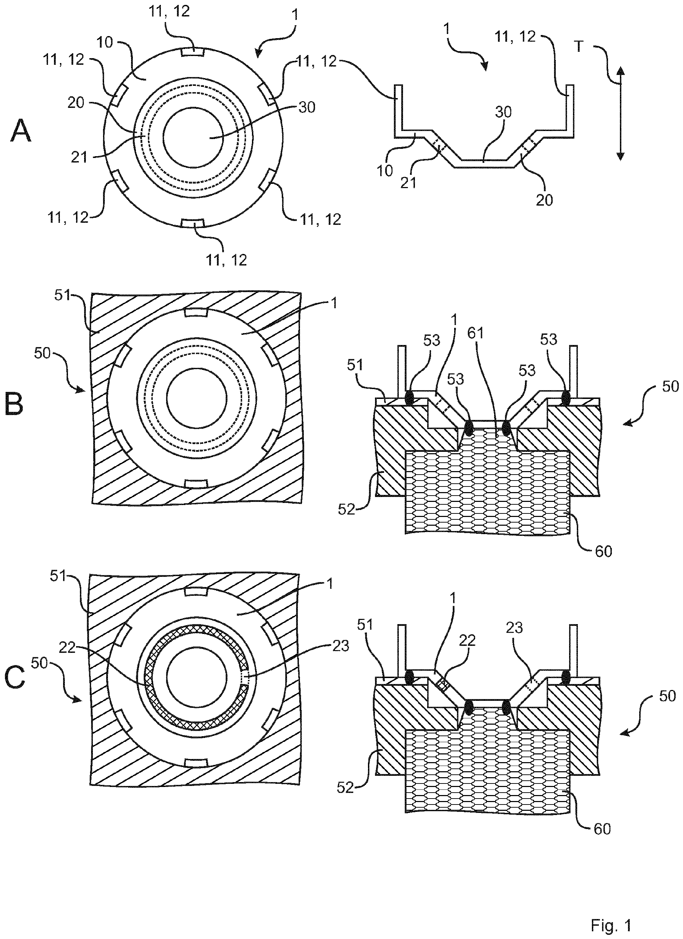

In Fig. 1 sind die Schritte eines erfindungsgemäßen Verfahrens zum Anordnen eines Kontaktelements 1 an einer Batteriezelle 60 gezeigt. Die Batteriezelle 60 ist Teil einer Batterieebene 50 eines Batteriestapels 40 (jeweils nicht mit abgebildet) für eine Batterievorrichtung eines Fahrzeugs. Jeweils auf der linken Seite ist eine Sicht von oben auf das Kontaktelement 1, auf der rechten Seite eine Schnittansicht gezeigt. Die oberste Abbildung zeigt den Schritt a) eines erfindungsgemäßen Verfahrens und ist mit A bezeichnet. Die mittlere Abbildung zeigt den Schritt b) eines erfindungsgemäßen Verfahrens und ist entsprechend mit B bezeichnet. Darüber hinaus zeigt die unterste Abbildung den Schritt c) eines erfindungsgemäßen Verfahrens und ist mit C bezeichnet. In den einzelnen Abbildungen werden zur Verbesserung der Übersichtlichkeit jeweils zumeist nur neu auftretende Elemente mit Bezugszeichen versehen.

In Schritt a) eines erfindungsgemäßen Verfahrens wird ein Kontaktelement 1 bereitgestellt. In der abgebildeten Ausgestaltungsform des Kontaktelements 1 weist dieses insbesondere einen Kontaktplattenabschnitt 10, einen Übergangsabschnitt 20 und einen Pluspolabschnitt 30 auf. Der Pluspolabschnitt 30 wird vom Übergangsabschnitt 20 umgeben, der wiederum vom Kontaktplattenabschnitt 10 umgeben ist. In dieser im Wesentlichen radialsymmetrischen Ausgestaltungsform eines erfindungsgemäßen Kontaktelements 1 ist der Übergangsabschnitt 20 konisch ausgebildet. Dadurch kann besonders einfach bereitgestellt werden, dass der Kontaktplattenabschnitt 10 und der Pluspolabschnitt 30 zueinander beabstandet, insbesondere entlang einer Tiefenrichtung T zueinander beabstandet, angeordnet sind. Die Tiefenrichtung T entspricht insbesondere einer Längserstreckung der Batteriezelle 60. Gleichzeitig sind der Kontaktplattenabschnitt 10 und der Pluspolabschnitt 30 im Wesentlichen parallel zueinander angeordnet. Der Übergangsabschnitt 20 weist ferner einen Perforationsbereich 21 auf, in den später im Schritt c) eines erfindungsgemäßen Verfahrens eine Sicherungsöffnung 22 und dadurch ein Sicherungsabschnitt 23 eingebracht werden wird. Am Rand des Kontaktplattenabschnitts 10 sind als Befestigungsklammern 12 ausgebildete Befestigungsmittel 11 angeordnet. Diese dienen für eine Befestigung einer weiteren Batteriezelle 60 einer weiteren Batterieebene 50 (jeweils nicht mit abgebildet).

Im nächsten Schritt b) eines erfindungsgemäßen Verfahrens wird das bereitgestellte Kontaktelement 1 an der Batteriezelle 60 angeordnet. Dieses Anordnen wird insbesondere derart durchgeführt, dass der Pluspolabschnitt 30 an einen Pluspol 61 der Batteriezelle 60 angeordnet wird und gleichzeitig der Kontaktplattenabschnitt 10 an einer Kontaktplatte 51 der Batterieebene 50 angeordnet wird. Die Batteriezelle 60 kann sich beispielsweise auch in einer Isolationsplatte 52 der Batterieebene 50 befinden bzw. in dieser angeordnet sein. Wie dargestellt, können besonders bevorzugt der Kontaktplattenabschnitt 10 an der Kontaktplatte 51 und der Pluspolabschnitt 30 am Pluspol 61 an Befestigungsstellen 53 befestigt sein. Dieses Befestigen wird besonders bevorzugt durch eine Befestigungsvorrichtung stoffschlüssig vorgenommen, besonders bevorzugt durch ein Laserschweißen, das durch eine Laservorrichtung durchgeführt wird. Ein besonders sicherer, mechanischer Halt des Kontaktelements 1 sowohl an der Kontaktplatte 51 als auch am Pluspol 61 der Batteriezelle 60 kann dadurch bereitgestellt werden. Ferner kann das Sicherstellen einer elektrisch leitenden Verbindung zwischen dem Pluspol 61 über das Kontaktelement 1 zur Kontaktplatte 51 durch dieses mechanische Befestigen besonders einfach sichergestellt werden.

Im abschließenden Schritt c) eines erfindungsgemäßen Verfahrens wird in einem Perforationsbereich 21 des Übergangsabschnitts 20 eine Sicherungsöffnung 22 eingebracht. Dadurch entsteht automatisch ein Sicherungsabschnitt 23. Wie dargestellt, können bevorzugt genau eine Sicherungsöffnung 22 und dadurch genau ein Sicherungsabschnitt 23 erzeugt werden. Alternativ können auch mehrere Sicherungsöffnungen 22 und dadurch mehrere Sicherungsabschnitte 23 erzeugt werden. Ferner kann besonders bevorzugt vorgesehen sein, dass zum Einbringen der Sicherungsöffnung 22 dieselbe Befestigungsvorrichtung, insbesondere die Laservorrichtung, verwendet wird, die im Schritt b) zum Befestigen des Kontaktelements 1 an den Befestigungsstellen 53 mit der Kontaktplatte 51 bzw. dem Pluspol 61 verwendet wurde. Das Anbringen des Kontaktelements 1 kann dadurch insgesamt vereinfacht werden. Besonders bevorzugt wird während des Einbringens der Sicherungsöffnung 22 das Material des Perforationsbereichs 21 verdampft und besonders bevorzugt abgesaugt. Für diesen Zweck kann vorgesehen sein, dass der Perforationsbereich 21 zumindest abschnittsweise aus einem verdampfbaren Material besteht. Eine Verunreinigung des Kontaktelements 1 durch das verdampfte Material kann durch das Absaugen vermieden werden. Wie abgebildet, kann sich die Sicherungsöffnung 22 bevorzugt zumindest abschnittsweise ringförmig im Übergangsabschnitt 20 erstrecken. In dieser Ausgestaltungsform erstreckt sich die Sicherungsöffnung 22 über 95 % der Erstreckung eines Vollrings. Der Sicherungsabschnitt 23 kann dadurch besonders klein ausgebildet sein. Besonders bevorzugt kann der Sicherungsabschnitt 23 einen Querschnitt für einen Stromfluss von weniger als 0,1 mm² aufweisen. Eine besonders gute Absicherung gegenüber einer Überlast kann auf diese Weise bereitgestellt werden, da bei einem zu hohen Stromfluss durch den Sicherungsabschnitt 23 dieser aufschmilzt und dadurch die elektrische Verbindung zwischen dem Pluspol 61 und der Kontaktplatte 51 unterbrochen wird.

Insgesamt kann durch die Verwendung eines erfindungsgemäßen Verfahrens das Anordnen eines Kontaktelements 1 an einer Batteriezelle 60 einer Batterieebene 50 vereinfacht werden. Nämlich dadurch, dass die Sicherungsöffnung 22 erst dann in das Kontaktelement 1 eingebracht wird, wenn dieses bereits an der Batteriezelle 60 angeordnet, bevorzugt befestigt ist, kann bereitgestellt werden, dass das Kontaktelement 1 insgesamt einfacher und mechanisch stabiler ausgebildet sein kann. Auch Einschränkungen und Randbedingungen, die bei der Planung des Sicherungsabschnitts 23 aufgrund von mechanischen Überlegungen hinsichtlich einer Stabilität des gesamten Kontaktelements 1 begründet sind, können durch die Verwendung eines erfindungsgemäßen Verfahrens entfallen.

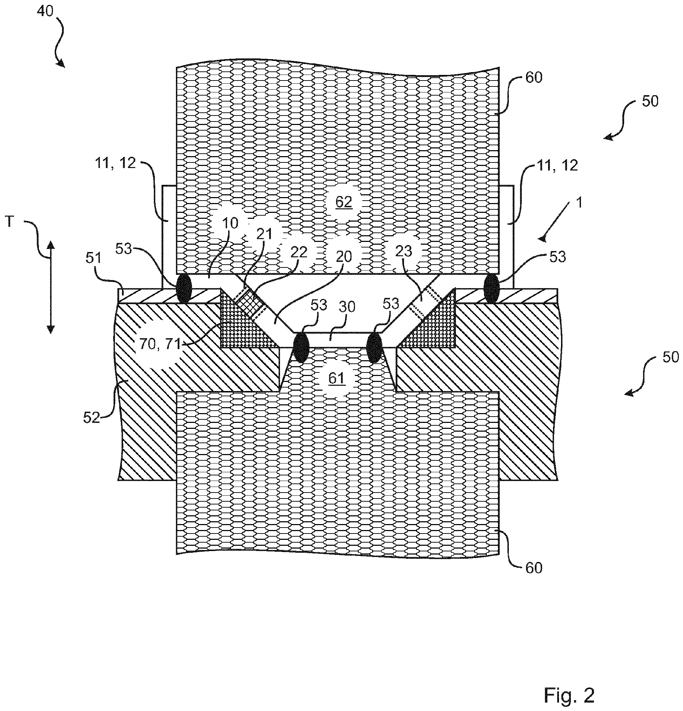

Fig. 2 zeigt einen Ausschnitt eines erfindungsgemäßen Batteriestapels 40. Insbesondere sind zwei Batterieebenen 50 und von diesen jeweils eine Batteriezelle 60 gezeigt. Ein erfindungsgemäßes Kontaktelement 1 sorgt für eine elektrisch leitende Verbindung eines Pluspols 61 der einen Batteriezelle 60 zum Minuspol 62 der Batteriezelle 60 in der weiteren Batterieebene 50. Das Kontaktelement 1 ist an einer Kontaktplatte 51 der unteren Batterieebene 50 und mit dem Pluspol 61 der entsprechenden Batterie 60 an Befestigungsstellen 53 stoffschlüssig verbunden. Für einen Halt der Batteriezelle 60 der oberen Batterieebene 50 sorgen als Befestigungsklammern 12 ausgebildete Befestigungsmittel 11, die insbesondere am Kontaktplattenabschnitt 10 des Kontaktelements 1 angeordnet sind. Eine Stapelbarkeit der einzelnen Batterieebenen 50 des Batteriestapels 40 entlang einer Tiefenrichtung T, die einer Längserstreckung der Batteriezellen 60 entspricht, kann dadurch besonders einfach bereitgestellt werden. Das Kontaktelement 1 weist insbesondere einen Kontaktplattenabschnitt 10, einen Pluspolabschnitt 30 sowie einen dazwischen angeordneten Übergangsabschnitt 20 auf. Da der Kontaktplattenabschnitt 10 und der Pluspolabschnitt 30 entlang der Tiefenrichtung T beabstandet angeordnet sind, erstreckt sich der Übergangsabschnitt 20 ebenfalls zumindest teilweise entlang der Tiefenrichtung T, in der gezeigten Ausgestaltungsform ist der Übergangsabschnitt 20 insbesondere konisch ausgebildet. Eine Isolationsplatte 52 sorgt weiter für eine mechanisch stabile Anordnung der Batterie 60 und gleichzeitig für eine elektrische Isolierung. Erfindungswesentlich ist im mechanisch wenig beanspruchten Übergangsabschnitt 20 ein Perforationsbereich 21 vorgesehen, in den eine Sicherungsöffnung 22 und dadurch ein Sicherungsabschnitt 23 eingebracht ist. Dieses Einbringen der Sicherungsöffnung 22 erfolgt erfindungsgemäß erst dann, wenn das Kontaktelement 1 bereits gemäß einem erfindungsgemäßen Verfahren an der Kontaktplatte 51 bzw. dem Pluspol 61 angeordnet, bevorzugt befestigt ist. Auf diese Weise kann das Kontaktelement 1 mechanisch besonders einfach ausgestaltet sein, wodurch beispielsweise auch eine Reduzierung der Dicke des Kontaktelements 1 bereitgestellt werden kann. Auch Randbedingungen für eine Planung des Sicherungsabschnitts 23, die lediglich auf eine mechanische Stabilität des Kontaktelements 1 abzielen, können vermieden werden. Die Auslegung des Sicherungsabschnitts 23 erfolgt somit lediglich aus Gründen, die eine elektrische Sicherheit, beispielsweise gegen Überlast berücksichtigen. Eine Sicherheit beim Betreiben eines Batteriestapels 40 kann dadurch erhöht werden. Ferner ist in Fig. 2 ein Isolationsvolumen 70 gezeigt, das zumindest abschnittsweise durch den Übergangsabschnitt 20 des Kontaktelements 1 begrenzt ist. Weitere Seiten des Isolationsvolumens 70 bilden beispielsweise die Kontaktplatte 51 sowie die Isolationsplatte 52. Das Isolationsvolumen 70 ist ferner mit einem Isolationsmaterial 71 verfüllt, das beispielsweise beim Einfüllen fließfähig oder rieselfähig ist, anschließend aushärtet und letztendlich das Isolationsvolumen 70 formstabil ausfüllt. Auf diese Weise kann zum einen eine bessere elektrische Isolierung zwischen der Batterie 60 und der Kontaktplatte 51 bereitgestellt werden. Zum anderen kann durch das Verfüllen von Hohlräumen eine mechanische Stabilität des Batteriestapels 40 erhöht werden.

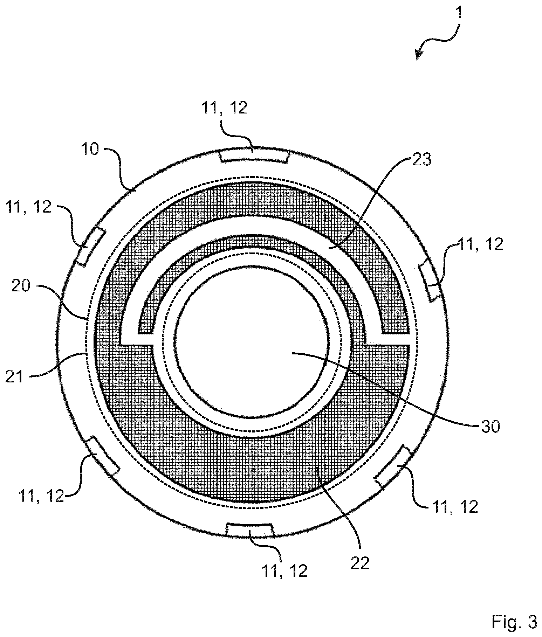

In Fig. 3 ist eine weitere mögliche Ausgestaltungsform eines erfindungsgemäßen Kontaktelements 1 gezeigt. Auch in dieser Ausgestaltungsform ist das Kontaktelement 1 zumindest im Wesentlichen rotationssymmetrisch ausgebildet. Gezeigt ist eine Draufsicht auf das erfindungsgemäße Kontaktelement 1. Deutlich sichtbar ist auch in dieser Ausgestaltungsform, dass der Kontaktplattenabschnitt 10 den Übergangsabschnitt 20 umgibt, der wiederum einen Perforationsbereich 21 zur Anordnung einer Sicherungsöffnung 22 und eines Sicherungsabschnitts 23 aufweist. Ferner umgibt wiederum der Übergangsabschnitt 20 den Pluspolabschnitt 30. Auch sind am äußeren Rand des Kontaktplattenabschnitts 10 ebenfalls als Befestigungsklammern 12 ausgebildete Befestigungsmittel 11 angeordnet. Im Vergleich beispielsweise zu der in Fig. 1 gezeigten Ausgestaltungsform eines erfindungsgemäßen Kontaktelements 1 sind in dieser Ausgestaltungsform nun die Sicherungsöffnung 22 und der Sicherungsabschnitt 23 unterschiedlich ausgebildet. So ist in dieser Ausgestaltungsform vorgesehen, dass der Sicherungsabschnitt 23 den Pluspolabschnitt 30 im Wesentlichen halbkreisförmig umfasst. Dies bedeutet mit anderen Worten, dass die Kontaktpunkte zwischen dem Sicherungsabschnitt 23 und dem Kontaktplattenabschnitt 10 beziehungsweise dem Sicherungsabschnitt 23 und dem Pluspolabschnitt 30 sich bezüglich der Mitte des Kontaktelements 1 gegenüberliegen. Ein Sicherungsabschnitt 23 mit einer großen Längserstreckung kann auf diese Weise besonders einfach bereitgestellt werden. Ein Durchschmelzen des Sicherungsabschnitts 23 beispielsweise bei einer zu hohen Stromlast kann dadurch besonders einfach sichergestellt werden. Auch kann durch eine derartige Ausgestaltung des Sicherungsabschnitts 23 bereitgestellt werden, dass dieser zumindest im Wesentlichen auch Federeigenschaften aufweist. Beim Anordnen des Kontaktelements 1 an einer Kontaktpatte 51 und einem Pluspol 61 einer Batteriezelle 60 (jeweils nicht mit abgebildet) kann dadurch ermöglicht werden, dass der Pluspolabschnitt 30 durch die Federwirkung des Sicherungsabschnitts 23 an den Pluspol 61 der Batteriezelle 60 gedrückt wird. Bereits dadurch kann ein sicheres Kontaktieren des Pluspolabschnitts 30 am Pluspol 61 der Batteriezelle 60 sichergestellt werden. Auch ein Befestigen, insbesondere ein Anschweißen durch eine Laservorrichtung, des Pluspolabschnitts 30 am Pluspol 61 der Batteriezelle 60 kann dadurch vereinfacht werden.

### Bezugszeichen

- 1: Kontaktelement

- 10: Kontaktplattenabschnitt
- 11: Befestigungsmittel
- 12: Befestigungsklammer

- 20: Übergangsabschnitt
- 21: Perforationsbereich
- 22: Sicherungsöffnung
- 23: Sicherungsabschnitt

- 30: Pluspolabschnitt

- 40: Batteriestapel

- 50: Batterieebene
- 51: Kontaktplatte
- 52: Isolationsplatte
- 53: Befestigungsstelle

- 60: Batteriezelle
- 61: Pluspol
- 62: Minuspol

- 70: Isolationsvolumen
- 71: Isolationsmaterial

- T: Tiefenrichtung

## Patentansprüche

1. Verfahren zum Anordnen eines Kontaktelements (1) an einer Batteriezelle (60) einer Batterieebene (50) eines Batteriestapels (40) für eine Batterievorrichtung eines Fahrzeugs, **gekennzeichnet durch folgende Schritte:**
a) Bereitstellen eines Kontaktelements (1) mit zumindest einem Kontaktplattenabschnitt (10), einem Übergangsabschnitt (20) und einem Pluspolabschnitt (30), wobei der Kontaktplattenabschnitt (10) den Übergangsabschnitt (20) umgibt und der Übergangsabschnitt (20) den Pluspolabschnitt (30) umgibt, und wobei ferner der Kontaktplattenabschnitt (10) und der Pluspolabschnitt (30) zueinander beabstandet und parallel oder zumindest im Wesentlichen parallel angeordnet sind,
b) Anordnen des in Schritt a) bereitgestellten Kontaktelements (1) an der Batteriezelle (60) der Batterieebene (50), wobei beim Anordnen des Kontaktelements (1) der Kontaktplattenabschnitt (10) an einer Kontaktplatte (51) der Batterieebene (50) und der Pluspolabschnitt (30) an einem Pluspol (61) der Batteriezelle (60) der Batterieebene (50) angeordnet wird, und
c) Einbringen zumindest einer Sicherungsöffnung (22) nach den Schritten a) und b) zur Erhöhung der mechanischen Stabilität des Kontaktelementes (1) in einen Perforationsbereich (21) des Übergangsabschnitts (20) zur Schaffung zumindest eines Sicherungsabschnitts (23) im Übergangsabschnitt (20), wobei der Sicherungsabschnitt (23) derart ausgebildet ist, dass er bei hoher Belastung zur Absicherung aufschmelzbar ist.

2. Verfahren nach Anspruch 1, **dadurch gekennzeichnet, dass** in Schritt c) eine einzige Sicherungsöffnung (22) eingebracht und dadurch ein einziger Sicherungsabschnitt (23) geschaffen wird.

3. Verfahren nach Anspruch 2, **dadurch gekennzeichnet, dass** die Sicherungsöffnung (22) abschnittsweise ringförmig ausgebildet ist, wobei eine Erstreckung der Sicherungsöffnung (22) über 75%, bevorzugt über 85%, besonders bevorzugt über 95%, der Erstreckung eines Vollrings entspricht.

4. Verfahren nach einem der vorangegangenen Ansprüche, **dadurch gekennzeichnet, dass** das Einbringen der zumindest einen Sicherungsöffnung (22) in Schritt c) durch eine Laserperforation durchgeführt wird.

5. Verfahren nach Anspruch 4, **dadurch gekennzeichnet, dass** durch die Laserperforation Material des Perforationsbereichs (21) verdampft wird, wobei bevorzugt dieses verdampfte Material abgesaugt wird.

6. Verfahren nach einem der vorangegangenen Ansprüche, **dadurch gekennzeichnet, dass** beim Anordnen in Schritt b) der Kontaktplattenabschnitt (10) des Kontaktelements (1) an der Kontaktplatte (51) und der Pluspolabschnitt (30) des Kontaktelements (1) am Pluspol (61) der Batteriezelle (60) befestigt werden.

7. Verfahren nach Anspruch 6, **dadurch gekennzeichnet, dass** der Kontaktplattenabschnitt (10) des Kontaktelements (1) an der Kontaktplatte (51) und der Pluspolabschnitt (30) am Pluspol (61) der Batteriezelle (60) durch eine Befestigungsvorrichtung stoffschlüssig befestigt werden, insbesondere dass der Kontaktplattenabschnitt (10) des Kontaktelements (1) an der Kontaktplatte (51) und der Pluspolabschnitt (30) am Pluspol (61) der Batteriezelle (60) durch eine Laservorrichtung stoffschlüssig laserverschweißt werden.

8. Verfahren nach Anspruch 7, **dadurch gekennzeichnet, dass** zum Einbringen der zumindest einen Sicherungsöffnung (22) in Schritt c) die in Schritt b) verwendete Befestigungsvorrichtung, insbesondere die Laservorrichtung, verwendet wird.

9. Verfahren nach einem der vorangegangenen Ansprüche, **dadurch gekennzeichnet, dass** ein Isolationsvolumen (70) der Batterieebene (50), das wenigstens auf einer Seite zumindest abschnittsweise durch den Übergangsabschnitt (20) begrenzt wird, zumindest teilweise mit einem Isolationsmaterial (71) verfüllt wird.

10. Verfahren nach Anspruch 9, **dadurch gekennzeichnet, dass** das Isolationsmaterial (71) zumindest eine der folgenden Eigenschaften aufweist:
- fließfähig
- rieselfähig
- aushärtend
- formstabil

11. Kontaktelement (1) für eine Batteriezelle (60) einer Batterieebene (50) eines Batteriestapels (40) für eine Batterievorrichtung eines Fahrzeugs, aufweisend einen Kontaktplattenabschnitt (10), einen Übergangsabschnitt (20) und einen Pluspolabschnitt (30), wobei der Kontaktplattenabschnitt (10) den Übergangsabschnitt (20) umgibt und der Übergangsabschnitt (20) den Pluspolabschnitt (30) umgibt, und wobei ferner der Kontaktplattenabschnitt (10) und der Pluspolabschnitt (30) zueinander beabstandet und parallel oder zumindest im Wesentlichen parallel angeordnet sind, **dadurch gekennzeichnet, dass** der Übergangsabschnitt (20) einen Perforationsbereich (21) zum Einbringen zumindest einer Sicherungsöffnung (22) zur Erhöhung der mechanischen Stabilität des Kontaktelementes (1) und zur Schaffung zumindest eines Sicherungsabschnitts (23) aufweist, wobei das Kontaktelement (1) unter Verwendung eines Verfahrens nach einem der Ansprüche 1 bis 10 angeordnet ist.

12. Kontaktelement (1) nach Anspruch 11, **dadurch gekennzeichnet, dass** der Perforationsbereich (21) zumindest abschnittsweise aus einem verdampfbaren Material besteht.

13. Kontaktelement (1) nach einem der Ansprüche 11 oder 12, **dadurch gekennzeichnet, dass** in einem an der Batteriezelle (60) der Batterieebene (50) angeordneten Position des Kontaktelements (1) der Übergangsabschnitt (20) wenigstens auf einer Seite zumindest abschnittsweise eine Seite eines Isolationsvolumens (70) der Batterieebene (50) begrenzt.

14. Kontaktelement (1) nach einem der Ansprüche 11 bis 13, **dadurch gekennzeichnet, dass** das Kontaktelement (1) Befestigungsmittel (11), insbesondere Befestigungsklammern (12), zum Befestigen eines Minuspols (62) einer Batteriezelle (60) einer weiteren Batterieebene (50) des Batteriestapels (40) aufweist, wobei die Befestigungsmittel (11) bevorzugt am Kontaktplattenabschnitt (10) angeordnet sind.

15. Batteriestapel (40), aufweisend zumindest eine Batterieebene (50) mit zumindest einer Batteriezelle (60), wobei an der Batteriezelle (60) ein Kontaktelement (1) angeordnet ist, **dadurch gekennzeichnet, dass** das Kontaktelement (1) gemäß einem der Ansprüche 11 bis 14 ausgebildet ist und gemäß einem Verfahren nach einem der Ansprüche 1 bis 10 an der Batteriezelle (60) angeordnet ist.

## Claims

1. Method for arranging a contact element (1) on a battery cell (60) of a battery plane (50) of a battery stack (40) for a battery device of a vehicle,
**characterized by the following steps:**
a) Providing a contact element (1) comprising at least a contact plate portion (10), a transition portion (20) and a positive pole portion (30), wherein the contact plate portion (10) surrounds the transition portion (20) and the transition portion (20) surrounds the positive pole portion (30), and further wherein the contact plate portion (10) and the positive pole portion (30) are spaced apart and arranged parallel or at least substantially parallel to each other,
b) Arranging the contact element (1) provided in step a) on the battery cell (60) of the battery plane (50), wherein, when arranging the contact element (1), the contact plate portion (10) is arranged on a contact plate (51) of the battery plane (50) and the positive pole portion (30) is arranged on a positive pole (61) of the battery cell (60) of the battery plane (50), and
c) Insertion of at least one securing opening (22) after steps a) and b) to increase the mechanical stability of the contact element (1) in a perforation region (21) of the transition portion (20) to create at least one securing section (23) in the transition portion (20), wherein the securing section (23) is designed such that it can be melted for securing under high load.

2. Method according to claim 1,
**characterized in that**
in step c), a single securing opening (22) is introduced, thereby creating a single securing section (23).

3. Method according to claim 2,
**characterized in that**
the securing opening (22) is annular in section, wherein an extension of the securing opening (22) corresponds to more than 75%, preferably more than 85%, particularly preferably more than 95%, of the extension of a full ring.

4. Method according to one of the preceding claims,
**characterized in that**
the insertion of the at least one securing opening (22) in step c) is carried out by laser perforation.

5. Method according to claim 4,
**characterized in that**
material of the perforation region (21) is vaporized by the laser perforation, this vaporized material preferably being sucked off.

6. Method according to one of the preceding claims,
**characterized in that**
when arranging in step b), the contact plate portion (10) of the contact element (1) is attached to the contact plate (51) and the positive pole portion (30) of the contact element (1) is attached to the positive pole (61) of the battery cell (60).

7. Method according to claim 6,
**characterized in that**
the contact plate portion (10) of the contact element (1) is fastened to the contact plate (51) and the positive pole portion (30) is fastened to the positive pole (61) of the battery cell (60) by a fastening device in a materially bonding manner, in particular **in that** the contact plate portion (10) of the contact element (1) is laser-welded to the contact plate (51) and the positive pole portion (30) is laser-welded to the positive pole (61) of the battery cell (60) in a materially bonding manner by a laser device.

8. Method according to claim 7,
**characterized in that**
the fastening device used in step b), in particular the laser device, is used to insert the at least one securing opening (22) in step c).

9. Method according to one of the preceding claims,
**characterized in that**
an insulation volume (70) of the battery plane (50), which is bounded at least on one side at least in sections by the transition portion (20), is at least partially filled with an insulation material (71).

10. Method according to claim 9,
**characterized in that**
the insulating material (71) has at least one of the following properties:
- flowable
- free-flowing
- curing
- dimensionally stable

11. A contact element (1) for a battery cell (60) of a battery plane (50) of a battery stack (40) for a battery device of a vehicle, comprising a contact plate portion (10), a transition portion (20) and a positive pole portion (30), wherein the contact plate portion (10) surrounds the transition portion (20) and the transition portion (20) surrounds the positive pole portion (30), and further wherein the contact plate portion (10) and the positive pole portion (30) are spaced apart and arranged parallel or at least substantially parallel to each other,
**characterized in that**
the transition portion (20) has a perforation region (21) for introducing at least one securing opening (22) for increasing the mechanical stability of the contact element (1) and for creating at least one securing section (23), the contact element (1) being arranged using a method according to one of claims 1 to 10.

12. Contact element (1) according to claim 11,
**characterized in that**
the perforation region (21) consists at least in sections of a vaporizable material.

13. Contact element (1) according to one of claims 11 or 12,
**characterized in that**
in a position of the contact element (1) arranged on the battery cell (60) of the battery plane (50), the transition portion (20) at least on one side at least sectionally delimits one side of an insulation volume (70) of the battery plane (50).

14. Contact element (1) according to one of claims 11 to 13,
**characterized in that**
the contact element (1) has fastening means (11), in particular fastening clips (12), for fastening a negative terminal (62) of a battery cell (60) of a further battery plane (50) of the battery stack (40), the fastening means (11) preferably being arranged on the contact plate portion (10).

15. Battery stack (40), having at least one battery plane (50) with at least one battery cell (60), a contact element (1) being arranged on the battery cell (60),
**characterized in that**
the contact element (1) is designed according to one of claims 11 to 14 and is arranged on the battery cell (60) according to a method according to one of claims 1 to 10.

## Revendications

1. Procédé pour disposer un élément de contact (1) sur une cellule de batterie (60) d'un plan de batterie (50) d'un empilement de batteries (40) pour un dispositif de batterie d'un véhicule,
**caractérisé par les étapes suivantes :**
a) Fournir un élément de contact (1) comprenant au moins une partie de plaque de contact (10), une partie de transition (20) et une partie de pôle positif (30), dans lequel la partie de plaque de contact (10) entoure la partie de transition (20) et la partie de transition (20) entoure la partie de pôle positif (30), et dans lequel en outre la partie de plaque de contact (10) et la partie de pôle positif (30) sont espacées et disposées parallèlement ou au moins sensiblement parallèlement,
b) Agencer l'élément de contact (1) fourni à l'étape a) sur l'élément de batterie (60) du plan de batterie (50), dans lequel, lors de l'agencement de l'élément de contact (1), la partie de plaque de contact (10) est agencée sur une plaque de contact (51) du plan de batterie (50) et la partie de pôle positif (30) est agencée sur un pôle positif (61) de l'élément de batterie (60) du plan de batterie (50), et
c) Mise en place d'au moins une ouverture de sécurité (22) selon les étapes a) et b) pour augmenter la stabilité mécanique de l'élément de contact (1) dans une zone de perforation (21) de la partie de transition (20) pour créer au moins une section de sécurité (23) dans la partie de transition (20), la section de sécurité (23) étant conçue de telle sorte qu'elle peut être fondue en cas de forte sollicitation pour la sécurisation.

2. Procédé selon la revendication 1,
**caractérisé en ce que**
à l'étape c), une seule ouverture de sécurité (22) est pratiquée, créant ainsi une seule section de sécurité (23).

3. Procédé selon la revendication 2,
**caractérisé en ce que**
l'ouverture de sécurité (22) est réalisée en forme d'anneau par sections, une extension de l'ouverture de sécurité (22) supérieure à 75%, de préférence supérieure à 85%, de manière particulièrement préférée supérieure à 95%, correspondant à l'extension d'un anneau plein.

4. Procédé selon l'une des revendications précédentes,
**caractérisé en ce que**
l'insertion de la au moins une ouverture de sécurité (22) à l'étape c) est réalisée par une perforation au laser.

5. Procédé selon la revendication 4,
**caractérisé en ce que**
la perforation au laser vaporise du matériau de la zone de perforation (21), ce matériau vaporisé étant de préférence aspiré.

6. Procédé selon l'une des revendications précédentes,
**caractérisé en ce que**
lors de l'agencement à l'étape b), la partie de plaque de contact (10) de l'élément de contact (1) est fixée à la plaque de contact (51) et la partie de pôle positif (30) de l'élément de contact (1) est fixée au pôle positif (61) de la cellule de batterie (60).

7. Procédé selon la revendication 6,
**caractérisé en ce que**
la partie de plaque de contact (10) de l'élément de contact (1) est fixée par liaison de matière à la plaque de contact (51) et la partie de pôle positif (30) est fixée au pôle positif (61) de l'élément de batterie (60) par un dispositif de fixation, en particulier **en ce que** la partie de plaque de contact (10) de l'élément de contact (1) est soudée par liaison de matière au laser à la plaque de contact (51) et la partie de pôle positif (30) au pôle positif (61) de l'élément de batterie (60) par un dispositif laser.

8. Procédé selon la revendication 7,
**caractérisé en ce que**
pour la mise en place de l'au moins une ouverture de sécurité (22) à l'étape c), on utilise le dispositif de fixation, en particulier le dispositif laser, utilisé à l'étape b).

9. Procédé selon l'une des revendications précédentes,
**caractérisé en ce que**
un volume d'isolation (70) du plan de batterie (50), qui est limité au moins sur un côté au moins par sections par la partie de transition (20), est rempli au moins partiellement d'un matériau d'isolation (71).

10. Procédé selon la revendication 9,
**caractérisé en ce que**
le matériau d'isolation (71) présente au moins l'une des propriétés suivantes :
- fluide
- s'écoulant librement
- durcissant
- indéformable

11. Elément de contact (1) pour un élément de batterie (60) d'un plan de batterie (50) d'un empilement de batterie (40) pour un dispositif de batterie d'un véhicule, comprenant une partie de plaque de contact (10), une partie de transition (20) et une partie de pôle positif (30), dans lequel la partie de plaque de contact (10) entoure la partie de transition (20) et la partie de transition (20) entoure la partie de pôle positif (30), et dans lequel en outre la partie de plaque de contact (10) et la partie de pôle positif (30) sont espacées l'une de l'autre et disposées parallèlement ou au moins sensiblement parallèlement,
**caractérisé en ce que**
la partie de transition (20) comprend une zone de perforation (21) pour réaliser au moins une ouverture de sécurité (22) pour augmenter la stabilité mécanique de l'élément de contact (1) et pour créer au moins une section de sécurité (23), l'élément de contact (1) étant disposé en utilisant un procédé selon l'une quelconque des revendications 1 à 10.

12. Elément de contact (1) selon la revendication 11,
**caractérisé en ce que**
la zone de perforation (21) est constituée au moins par sections d'un matériau évaporable.

13. Elément de contact (1) selon l'une des revendications 11 ou 12,
**caractérisé en ce que**
dans une position de l'élément de contact (1) disposée sur l'élément de batterie (60) du plan de batterie (50), la partie de transition (20) délimite au moins sur un côté au moins par sections un côté d'un volume d'isolation (70) du plan de batterie (50).

14. Elément de contact (1) selon l'une quelconque des revendications 11 à 13,
**caractérisé en ce que**
l'élément de contact (1) comporte des moyens de fixation (11), notamment des pinces de fixation (12), pour fixer un pôle négatif (62) d'un élément de batterie (60) d'un autre plan de batterie (50) de l'empilement de batteries (40), les moyens de fixation (11) étant de préférence disposés sur la partie de plaque de contact (10).

15. Empilement de batteries (40), présentant au moins un plan de batterie (50) avec au moins une cellule de batterie (60), un élément de contact (1) étant disposé sur la cellule de batterie (60),
**caractérisé en ce que**
l'élément de contact (1) est réalisé selon l'une des revendications 11 à 14 et est disposé sur l'élément de batterie (60) selon un procédé selon l'une des revendications 1 à 10.
